# EUROPEAN PATENT APPLICATION

(11) **EP 2 642 486 A1**
(43) Date of publication of application: **25.09.2013**
(21) Application number: 12290095.4
(22) Date of filing: 19.03.2012
(51) Int. Cl.: G11B 27/034, G11B 27/28, G06K 9/00, G06F 17/30

(54) **Method and equipment for achieving an automatic summary of a video presentation**

(71) Applicant: Alcatel Lucent International, 75009 Paris (FR)
(72) Inventor: Marilly, Emmanuel, 91620 Nozay (FR); Nouri, Marwen, 91620 Nozay (FR); Martinot, Olivier, 91620 Nozay (FR)
(74) Representative: Croonenbroek, Thomas Jakob

(57) **Abstract**

A method for achieving an automatic summary of a video presentation is presented, comprising the following steps:
- selecting at least one identifiable action of a presenter in a video analyser,
- associating the at least one selected identifiable action of the presenter with a video extraction instruction,
- recording a presentation using the video analyser,
during the recording of the presentation,
- detecting the occurrence of at least one selected identifiable action based on a video analysis,
- applying a video extraction instruction associated with the at least one detected identifiable action,
- storing the video extracts in a data repository,

- compiling the stored video extracts in a summary of the presentation.

## Description

### BACKGROUND OF THE INVENTION

The present invention relates to the field of video summaries.

Video tools are more and more used for live presentations, meetings or conferencing in order to broadcast or store the presentation. As such presentations may be long, it would be useful, for missing persons or even for the participants of the presentation to have a summary of the key points of the presentation as soon as the presentation is over.

Different types of automatic video summary have been developed that can be gathered in three groups:
- audio stream analysis methods wherein the summary is achieved based on audio analysis,
- video stream analysis method wherein the summary is achieved based on the video stream and, - hybrid method wherein the summary is achieved based on both the video and the audio stream. However, in the state of the art, these methods are usually developed for a specific field, for example soccer game summary wherein the video analysis can detect that the ball is located closed to the goal post or that the commentator speaks louder to define video extracts.

Thus, the methods developed in the state of the art are usually not adapted to presentation or conference summary and therefore produce poor results in such context.

### SUMMARY OF THE INVENTION

It is therefore an object of the present invention to overcome at least partially the drawbacks of the summary methods of the state of the art and to provide a solution that enables achieving an automatic summary of a presentation.

Thus, the present invention refers to a method for achieving an automatic summary of a video presentation comprising the following steps:
- selecting at least one identifiable action of a presenter in a video analyser,
- associating the at least one selected identifiable action of the presenter with a video extraction instruction,
- recording a presentation using the video analyser,
   during the recording of the presentation,
- detecting the occurrence of at least one selected identifiable action based on a video analysis,
- applying a video extraction instruction associated with the at least one detected identifiable action,
- storing the video extracts in a data repository.

The embodiments of the present invention also refer to a computer program product for achieving an automatic summary of a video presentation comprising instructions which, when executed on a processor, cause the processor to carry out the steps of:
- selecting at least one identifiable action of a presenter upon reception of a selection command from a user,
- associating at least one selected identifiable action of the presenter with a video extraction instruction upon reception of an association command from a user,
- receiving video data corresponding to a presentation,
- detecting the occurrence of at least one selected identifiable action based on a video analysis,
- applying a video extraction instruction associated with a detected identifiable action,
- storing the video extracts in a data repository.

The embodiments of the present invention also refer to an equipment for achieving an automatic summary of a video presentation comprising
- at least one data repository,
- a video analyser configured for:
- storing at least one identifiable action of a presenter in a data repository,
- associating the at least one identifiable action of the presenter with a video extraction instruction,
- receiving a video stream, from a video recorder, corresponding to a video presentation,
- detecting at least one identifiable action of the presenter in the video stream corresponding to the video presentation,
- applying a video extraction instruction associated with a detected identifiable action,
- storing video extracts in a data repository.

### BRIEF DESCRIPTION OF THE DRAWINGS

FIG.**1** is a diagram representing the different steps according to the embodiments of the present invention;
FIG.**2** is a diagram of the different functions of the video analyser according to an embodiment of the present invention;
FIG.**3** is a diagram representing the organization of the video summary policies according to the embodiments of the present invention;
FIG.**4** is a diagram of the different categories of event identification of the video analyser according to an embodiment of the present invention;
FIG.**5** is a diagram of the different options of hand gesture;
FIG.**6** is a diagram of the hand sign corresponding to the option number 1 in Fig.5;
FIG.**7** is a diagram of the hand sign corresponding to the option number 4 in Fig.5;

### DETAILED DESCRIPTION OF THE INVENTION

As used herein, the term "identifiable action" or "identifiable event" refers to an action or event that is identifiable or recognizable by a video analyser such as a gesture, a movement or a sound;

As used herein, the term "API" refers to the acronym Application Programming Interface;

The embodiments of the present invention refer to a method for achieving an automatic summary of a video conference or video presentation wherein the video extracts used for the video summary are selected by a presenter by achieving a preselected action that is identified by a video analyser of the video summary equipment.

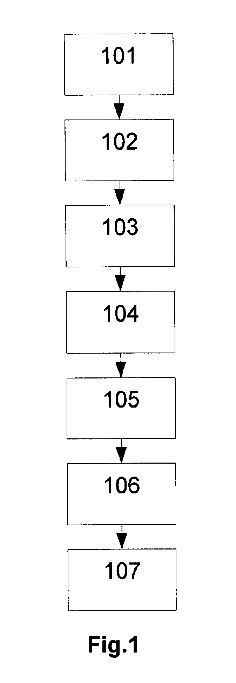

Figure 1 represents the different steps of the method according to the embodiments of the invention.

The first step 101 refers to the launching of the video summary equipment and the creation of a new session associated with a presentation. This creation process also comprises the creation of a file associated with the created session within a data repository.

The second step 102 refers to the selection by a user, generally the presenter himself, of an available identifiable action or event among a set or a library of identifiable actions already stored in a data repository. The stored identifiable actions may be organized in different categories, for example a first category corresponding to the gestures having sub-categories corresponding to different parts of the body such as arm, head, hand, whole body..., a second category corresponding to sounds and having sub-categories such as key word, other sounds...and a third category corresponding to the combination of gesture and sounds and comprising corresponding sub-categories (a combination of the gesture sub-categories and the sound sub-categories) in order to ease the choice of one identifiable action. Optionally, the presenter may define its own identifiable action. This definition is achieved by recording the presenter while he does the identifiable action, such as a specific gesture or the delivery of a key word or a key expression. The video analyser comprises gesture and sound recognition means that are capable of analysing the features of the identifiable action to define the singularities or pattern of this action and consequently to identify a future occurrence of the said action. The recorded identifiable action is then stored in a data repository such as a database, a look-up table, a memory or a register.

The third step 103 refers to the association of the selected identifiable action or event with an instruction of a video extraction. Different types of instructions may be set up:
- A triggering of a video sequence extraction during a predetermined amount of time for example 1 minute. In this case, when an action selected in step 102 is identified, the next minute of the presentation is extracted.
- A triggering of an extraction for a predetermined number of following sentences. In this case, if the number of sequences is one, when an action selected in step 102 is identified, the next sentence of the presentation is extracted.
- A triggering of an extraction until the occurrence of an instruction for stopping the extract if it is necessary. In this case, when an action selected in step 102 is identified, the following of the presentation is extracted until a stop instruction is identified.
- A stop of an extraction. The action of the stop of an extraction can be the same as the action for triggering an extraction. In this case when the action is detected for the first time, the extraction is triggered and when the action is detected for the second time, the extraction is stopped.

A set or a library of instructions is stored in a data repository and is available for selection but a new instruction can also be tailor made by the user.

Steps 102 and 103 can be achieved several times to select several identifiable actions and associate them with different instructions.

Steps 101, 102 and 103 are configuration steps used to configure the automatic summary equipment and are achieved before the beginning of the conference. The following steps will be achieved during or after the conference.

The fourth step 104 refers to the detection or identification of an occurrence of an identifiable action selected in step 102 based on a video analysis. During the conference, the video stream is analysed based on the configuration steps previously described so that whenever a selected action of the presenter such as a selected gesture or a selected sound is made by the presenter, this action is detected and recognized by the recognition means of the video analyser. Such detection is achieved by the comparison of the stored selected actions with the actions provided by the video stream of the conference.

The fifth step 105 corresponds to the application of the video extraction instruction defined in step 103 and associated with the action identified in step 104 for example the triggering of an extraction of the next sentence of the presenter.

The sixth step 106 refers to the storing of the video extract defined by the extraction instruction of step 104 and extracted in step 105 in the file of the data repository created in step 101. The different extracts being stored in a chronological order.

The seventh step 107 refers to the compilation of the different stored video extracts and is achieved at the end of the presentation.

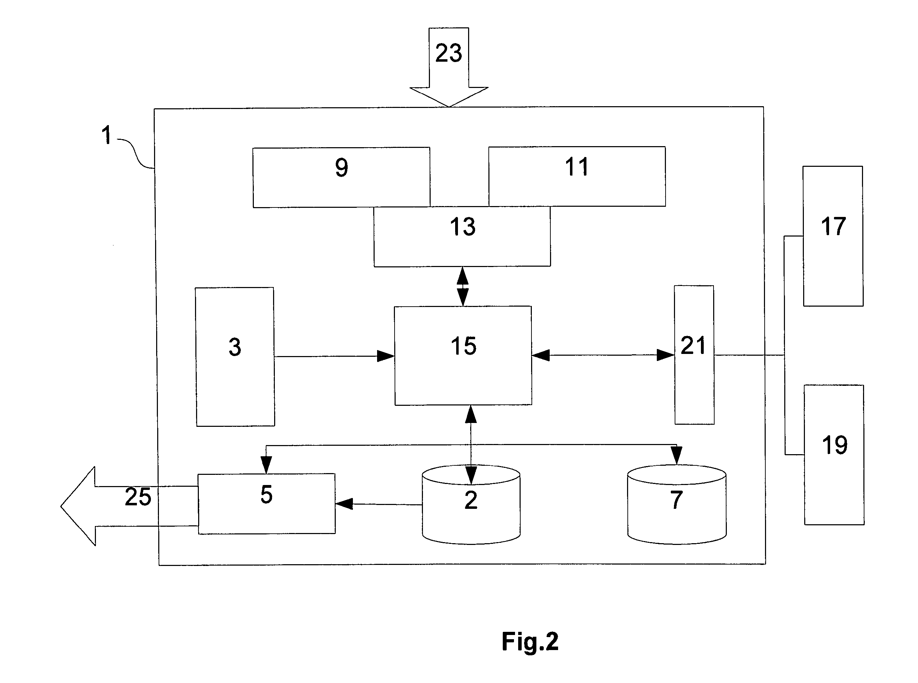

The organization of the video summary equipment will now be described based on Fig.2 which represents the different functions of the video summary equipment 1 and their interaction:
- a video storage area 2 for storing videos such as the video extracts.
- a summary video authoring interface 3 which is the interface that allows the user defining the summary policies such as the creation and/or the selection of identifiable actions and the definition of their associated instructions. Thus, the user has the capability to define which action or event of the video will trigger an extraction of a video sequence and what are the conditions of the extraction. The conditions of the extraction correspond to the relative temporal position of the extracts with respect to the triggering of the extraction for example, before, during (a part before and a part after) or after the triggering and the properties defining the duration of the extract, for example one minute or two sentences.
- a summary encoder 5 for compiling and encoding the summary extracts at the end of the presentation.
- a summary rules storage area 7 for storing the summary policies. The summary policies are pre-defined policies or policies defined by the user through the summary video authoring interface 3. The summary rules storage area 7 and the video storage area 2 can be gathered in the same data repository.
- a low level analyser module 9 that achieves low level analysis such as colour recognition,
- a high level analyser module 11 that achieves high level analysis such as face recognition, gesture recognition or key word recognition. Both types of analysers work together, comprise sound and gesture analysing and recognition means and can be gathered in a single analysing module.
- an analyser orchestrator 13 for managing the different analysers located in the low level 9 and high level 11 analyser modules in order to apply the relevant analysis according to the requested action or event identification.
- a summary engine 15 that is in charge of applying the summary policies defined by the user through the summary video authoring interface 3. The summary engine 15 also interacts with external entities such as a metadata aggregator 17 or a gesture recognition authoring tool 19 through application programming interfaces (APIs) 21.

Indeed, external tools can be used in the video analysis in addition or as a complement of internal tools.

The gesture recognition authoring tool 19 is used for gesture modelling or gesture pattern definition using for example active curve or scribble propagation techniques while the metadata aggregator is used to provide metatadata resulting of external analysers enhancing the video analysis. For example, some types of gesture or moves may be analysed by a predetermined dedicated external analyser. In this case, the summary engine uses the corresponding API to get or received the occurrence of the selected gesture or move in the video stream.

However, it has to be noted that these external functions provided by the APIs are optional and the video analyser may be used without using any external tools.

Based on the defined policies, the summary engine 15 sends identification requests to the analyser orchestrator 13 or to an API for identifying the occurrence of the selected identifiable actions during the conference, extracts the different video sequences from the video stream of the conference based on the analyser orchestrator 13 or the API information and stores them in the video storage area 2.

At the end of the presentation, the summary engine sends instructions to the summary encoder 5 to combine or to compile the stored video extracts and to encode the video summary. The arrow 23 refers to the input video stream corresponding to the presentation received from the video recorder and the arrow 25 refers to the video summary which is delivered by the video summary equipment 1 at the end of the presentation.

Concerning the active curve or scribble propagation technique, it refers to an algorithm wherein a scribble is drawn on the gesture to define its singularities (e.g. an arm). The scribble is then propagated to the following video frames. The propagation of the scribble is achieved by estimating the future positions of the scribble on the next frame (e.g. move of the arm) based on previous information extracted from the image. The scribble propagation technique being used both for the gesture modeling and for the gesture recognition.

The metadata aggregator 17 is a database storing metadata of external analysers. Thus, the metadata aggregator 17 gives the capability to combine information coming from different external analysers. The said information can be transmitted to internal high level analysers or used directly by the summary engine 15 for gesture or move recognition.

The external analysers put their metadadata in the metadata aggregator 17 using a push-oriented method. These data are then transmitted to the summary engine 15 or the analyser orchestrator 13 by pull-oriented method or event oriented method. In the pull-oriented method, the data are provided upon request to the metadata aggregator 17 while in the event oriented method, the summary engine 15 registers toward the metadata aggregator 17 to an event and the corresponding data are transmitted to the summary engine 15 as soon as the data corresponding to the event become available. For example, if the metadata correspond to a face recognition, when the face is recognized by the external analyser, metadata are sent to to the summary engine to inform of the recognition of a predetermined face.

Besides, in order to ensure compatibility between the external analysers and the summary engine 15, simple and widespread protocols are used such as the HyperText Transfer Protocol (HTTP) protocol, the Yaml Ain't Markup Language (YAML) or the Extensible Markup Language (XML).

Thus, to each identifiable action or event of the video summary policy, a video analyser or a combination of analysers are associated to the identifiable action. These analysers are internal or external analysers and when an identifiable action is selected by a user, the summary engine activates the corresponding analyser or the application corresponding to the analyser. The video stream is then forwarded to the analyser or the application to detect an occurrence of the selected action. If several analysers are used in combination, the data coming from the different external analysers are gathered by the metadata aggregator 17 and transmitted to the summary engine 15 to be combined if necessary with the data provided by the analyser orchestrator.

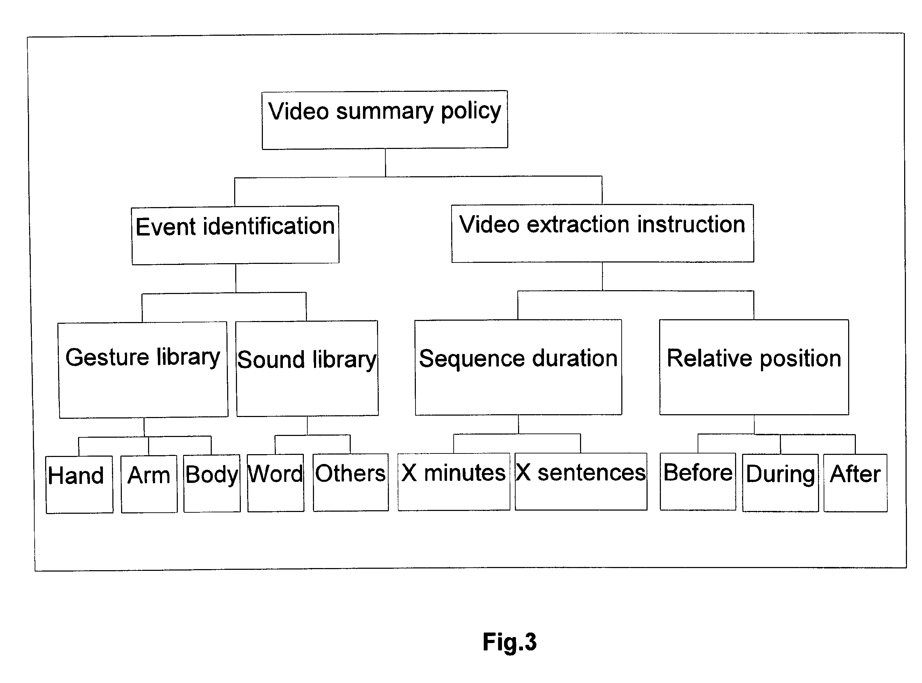

Fig.3 represents an example of organization of the different levels of the policies of the summary video authoring interface 3. The policies comprise two main branches, one corresponding to the event identification and a second corresponding to the video extraction instruction.

In the event identification branch, the user can selects between different types of events or actions such as a gesture library and a sound library which are themselves divided into sub-categories such as hand gestures, arm gestures, body gestures on one side and key words or key sounds on the other side.

In the video extraction branch, the user can select a sequence duration to define a duration of the extract or a number of sentences and the temporal relative position of the extracts with respect to the occurrence of the event defined in the event identification branch, for example before, during or after the occurrence of the identifiable action.

Concerning the structure of the equipment for achieving an automatic summary 1. The said equipment comprises a data repository which comprises storage means or storage areas for storing the different data (policies, video extracts...). These storage means could be any storage medium such as a compact disc (CD) or disk, a Universal Serial Bus (USB) memory stick or any kind of memory, e.g. at least one Random Access Memory (RAM) or Read Only Memory (ROM), or the like, or any combination thereof, e.g. one ROM and two RAMs, or two disks...

Furthermore, the video summary equipment 1 comprises processing means which are provided through the use of a dedicated hardware as well as hardware capable of executing software in association with appropriate software dedicated to the video analysis. When providing by a processor, the processing means may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardwares, conventional and/or custom, may also be included.

The steps of the method are implemented through or together with a computer program comprising software instructions executed by the above-mentioned processing means and written in e.g. Very high speed integrated circuit Hardware Description language (VHDL) or C, C++, Java, or using another programming language, or implemented by one or more VHDL, C, C++, or Java processes or routines, or several software modules being executed on at least one hardware device.

Furthermore, the video analyser can be adapted to any video coding formats so that no specific video recorder is required and so that any video recorder can be used to provide a video stream of the conference. The video stream may also be provided by several video recorders and the analysis is achieved on each of the provided video streams.

In order to better understand the embodiments of the present invention, an example will now be described.

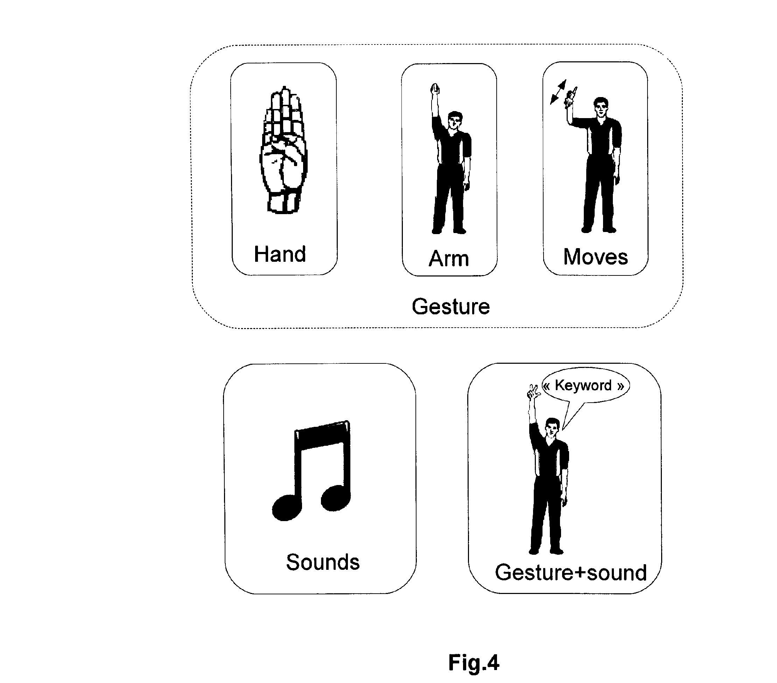

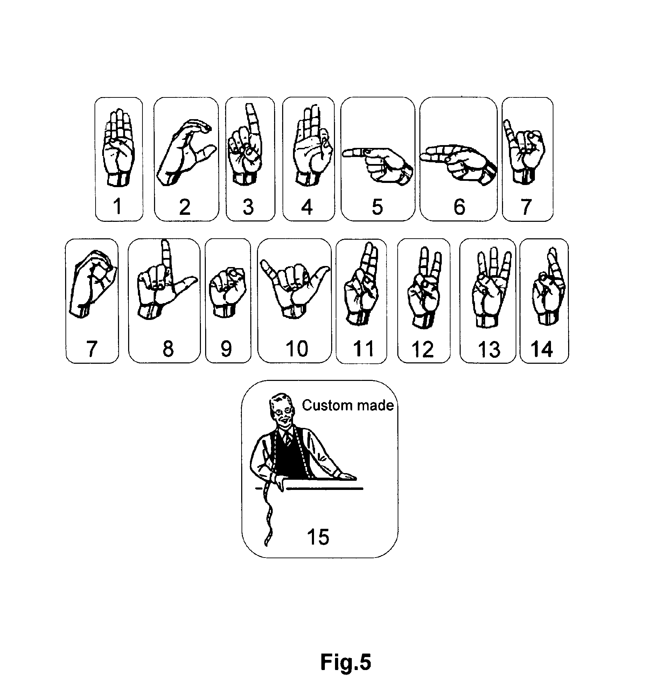

A presenter, Mr. Dupont, is about to make a presentation for a conference which will be recorded by a video recorder. A computer comprising a video summary equipment is also linked to the video recorder. In order to set up the video summary equipment, Mr. Dupont launches the dedicated software program on the computer, create a new video summary session named "conference Mr Dupont" and starts the summary configuration. The configuration starts with the action selection. Fig.4 represents an example of the action selection window displayed on the screen of the computer. This window comprises several options. A first set of options corresponding to the gestures and comprising a hand gesture option, an arm gesture option and a move option. Other options refer to a sound option and a gesture+sound option. Thus, Mr Dupont decides to select the hand option to define a hand sign for triggering an extraction. Fig.5 represents the hand gesture selection window. This window comprises fifteen different options, fourteen corresponding to predetermined signs and one corresponding to a custom made option wherein the user can define its own hand sign, for example by doing its sign in front of the video recorder during a predetermined amount of time, for example two seconds, the hand sign being then analysed and recorded by the video analyser or the gesture recognition authoring tool.

Mr Dupont chooses the option number 4. The chosen sign is then associated with an extraction instruction using the menus of the video analyser, for example an extraction of 2 minutes starting at the recognition of the chosen sign. Besides, Mr Dupont wants to define an action for the beginning of the conference and an action for the end of the conference. Using the gesture+sound option in Fig.4 , Mr Dupont defines a combination of the hand gesture number 1 with the keyword sound "start" for the beginning of the conference. The keyword action can be registered by recording the voice of Mr Dupont saying "start". The sound is then analysed by sound recognition means provided by the video analyser in order to be identified. This gesture+sound combination is then associated with the extraction instruction corresponding to the start of the conference and therefore the start of the analysis of the recorded video for recognizing the predefined actions of Mr. Dupont and the extractions. In the same way, Mr. Dupont defines the hand gesture number 1 with the keyword "stop" for the end of the extractions or end of the conference. Besides, these gesture+sound options are associated with an external analyser so that the summary engine uses the application programming interface (API) to access to the resources of this external analyser in order to detect the occurrence of the selected gesture+sound options.

After having configured the video analyser, Mr. Dupont can start his conference at any time.

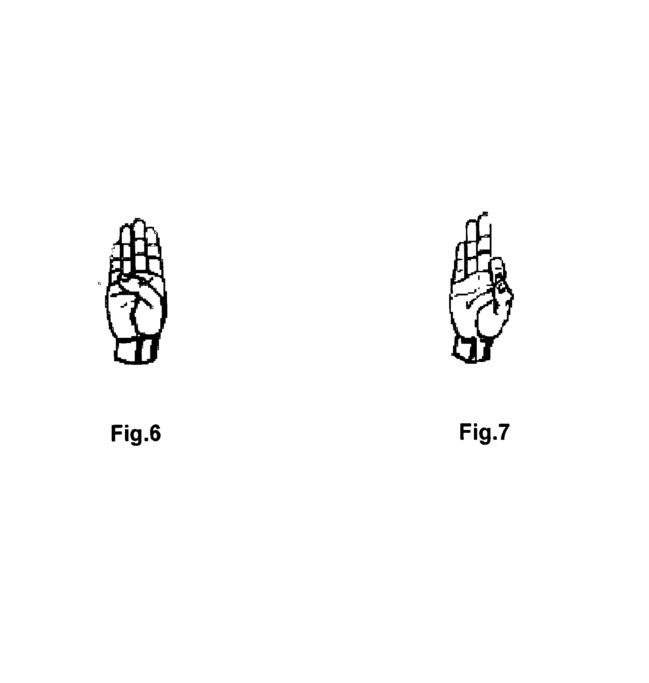

To launch the video analysis, Mr. Dupont does the hand gesture represented in fig.6 and corresponding to the hand gesture number 1 and says "start". The summary instruction associated with this action, which is the launching of the analysis of the video stream by the video analyser, is then triggered.

During his conference, each time Mr. Dupont does the hand sign represented in Fig.7, the next 2 minutes of the video are extracted and stored in a dedicated file of the session "conference Mr Dupont".

At the end of the conference, Mr. Dupont does the hand gesture represented in Fig.6 and corresponding to the hand gesture number 1 and say "stop". This action is identified by video analyser and the associated summary instruction is triggered so that the video analysis is stopped and the video extracts of the session "conference Mr Dupont" are compiled to produce a summary of the conference. This summary can then be sent to the targeted persons, for example the participants of the conference or be stored on a server to be accessible to users connected on the network...

Thus, the use of a video analyser to recognize actions of the presenter and the definition of recognizable actions allow the automatic establishment of a summary during the conference. The summary is therefore available immediately at the end of the presentation, dynamically managed by the presenter and reflects the editorial view of the presenter. Furthermore, such solution can be adapted to any video meeting system as any video input can be analysed by the video summary equipment.

## Claims

1. Method for achieving an automatic summary of a video presentation comprising the following steps:
- selecting at least one identifiable action of a presenter in a video analyser,
- associating the at least one selected identifiable action of the presenter with a video extraction instruction,
- recording a presentation using the video analyser,
during the recording of the presentation,
- detecting the occurrence of at least one selected identifiable action based on a video analysis,
- applying a video extraction instruction associated with the at least one detected identifiable action,
- storing the video extracts in a data repository.

2. Method in accordance with claim 1 wherein it also comprises, at the end of the presentation, a step for compiling the video extracts.

3. Method in accordance with claim 1 or 2 wherein the identifiable action is an identifiable gesture and wherein the video analyser comprises gesture recognition means.

4. Method in accordance with claim 1 or 2 wherein the identifiable action is an identifiable sound and wherein the video analyser comprises sound recognition means.

5. Method in accordance with one of the previous claims wherein it comprises a preliminary step of defining at least one identifiable action of a presenter.

6. Method in accordance with one of the previous claims wherein the video extraction instruction corresponds to a triggering of a video extraction during a predetermined amount of time.

7. Method in accordance with one of the claims 1 to 5 wherein the video extraction instruction corresponds to a triggering of a video extraction of a sentence.

8. Method in accordance with one of the claims 1 to 5 wherein a first video extraction instruction corresponds to a triggering of a video instruction until the identification of a second video instruction that corresponds to the end of the extraction.

9. Computer program product for achieving an automatic summary of a video presentation comprising instructions which, when executed on a processor, cause the processor to carry out the steps of:
- selecting at least one identifiable action of a presenter upon reception of a selection command from a user,
- associating at least one selected identifiable action of the presenter with a video extraction instruction upon reception of an association command from a user,
- receiving video data corresponding to a presentation,
- detecting the occurrence of at least one selected identifiable action based on a video analysis,
- applying a video extraction instruction associated with a detected identifiable action,
- storing the video extracts in a data repository.

10. Equipment for achieving an automatic summary of a video presentation comprising
- at least one data repository,
- a video analyser configured for:
- storing at least one identifiable action of a presenter in a data repository,
- associating the at least one identifiable action of the presenter with a video extraction instruction,
- receiving a video stream, from a video recorder, corresponding to a video presentation,
- detecting at least one identifiable action of the presenter in the video stream corresponding to the video presentation,
- applying a video extraction instruction associated with a detected identifiable action,
- storing video extracts in a data repository.

11. Equipment in accordance with claim 9 wherein it also comprises a video analyser configured for compiling video extracts at the end of a video presentation.
